# DEMANDE DE BREVET EUROPEEN

(11) **EP 0 726 023 A1**
(43) Date de publication de la demande: **14.08.1996**
(21) Numéro de dépôt: 96490001.3
(22) Date de dépôt: 05.01.1996
(51) Int. Cl.: A01B 45/04

(54) **Dispositif pour dérouler au sol au moins un rouleau de gazon**

(30) Priorité: 07.02.1995 FR 9501595
(71) Demandeur: Belle, Jacques, 59552 Lambres Les Douai (FR)
(72) Inventeur: Belle, Jacques, 59552 Lambres Les Douai (FR)
(74) Mandataire: Ecrepont, Robert Pierre

(57) **Abrégé**

L'invention se rapporte à un dispositif pour dérouler au sol au moins un rouleau de gazon à l'aide d'une machine.

Ce dispositif est caractérisé en ce que la machine comprend :
- d'une part, des moyens (9) de déplacement de l'axe portant le rouleau par rapport au châssis pour amener au moins un rouleau sur le sol et,
- d'autre part, tant des liens (10) par lesquels cet axe (6) est relié au châssis que des moyens (11) d'enroulement de ces liens permettant :
   . d'une part de déplacer l'axe selon une trajectoire prédéterminée parallèle au moins au plan du sol et,
   . d'autre part, de modifier la longueur d'un des liens par rapport à l'autre lien afin de contrôler l'orientation de cet axe (6).

## Description

L'invention se rapporte à un dispositif pour dérouler au sol au moins un rouleau de gazon.

Pour constituer une pelouse aux lieu et place d'un semis effectué directement sur la surface à engazonner, il est connu de prélever sur une surface annexe préalablement engazonnée des bandes de gazon pour les plaquer ensuite sur la surface à garnir.

Cette technique permet de créer rapidement une pelouse.

La pelouse peut être ainsi utilisée rapidement contrairement aux pelouses semées pour lesquelles le terrain n'est pas inutilisable avant environ six mois.

Les bandes de gazon prélevées sont généralement mises en rouleaux et transportées sous cette forme pour être ensuite déroulées.

Ces bandes de gazon se composent d'un substrat d'épaisseur prédéterminée dans lequel sont enchevêtrées les racines des plantes et d'une couche apparente superficielle formée par le gazon.

Lors de la pose, il est primordial de juxtaposer correctement les bandes de gazon si on souhaite obtenir un tapis uniforme identique à celui pouvant être obtenu par semis.

Lorsque ces bandes de gazon sont étroites et courtes, elles peuvent être manipulées facilement à la main ce qui permet une pose plus précise mais cela multiplie les zones de raccordement entre chaque bande.

En augmentant la largeur et la longueur de ces bandes, on réduit le nombre de raccord mais, malheureusement, cela augmente leur poids et, pour effectuer la pose, il faut avoir recours à des machines spéciales.

Pour la manipulation de ces rouleaux relativement larges et longs, on connaît (EP-A-0178081) une machine de pose d'un rouleau de gazon comprenant :
- un châssis porté par des organes de roulement,
- monté en porte à faux par rapport au châssis de la machine, un axe qui, supportant le rouleau de gazon, est monté transversalement au sens de déplacement de la machine et,
- des moyens moteurs pour entraîner en rotation le rouleau de gazon et le dérouler en synchronisme avec la vitesse de déplacement de la machine.

L'axe portant le rouleau de gazon est porté par une fourche dont les extrémités libres présentent des moyens de guidage en rotation de cet axe ainsi que des moyens d'assemblage rapide de l'axe sur la fourche.

Cette fourche est placée à l'avant de la machine selon le sens conventionnel de déplacement.

Le rouleau de gazon est maintenu largement au dessus du sol et, pour son entraînement en rotation, il est prévu un contre rouleau qui prend appui sur la surface périphérique du rouleau de gazon pour le dérouler.

Après que le rouleau se soit déroulé au sol, les organes de roulement du véhicule plaquent le gazon au sol.

Pour la direction de la machine, le châssis est scindé en deux demi-châssis articulés l'un par rapport à l'autre par l'intermédiaire d'un axe d'articulation vertical médian et de vérins hydrauliques.

Si cette machine évite un travail long et fastidieux, elle présente d'autres inconvénients.

Notamment si une telle machine convient pour un travail sur terrain plat, lorsqu'il faut poser les bandes de gazon sur un terrain en forte pente ou en devers, cela devient très difficile voire impossible.

Aussi, pour les talus bordant les voies de circulation, ce qui représente des surfaces engazonnées importantes, on ne peut malheureusement utiliser cette machine de plaquage de gazon et on doit faire appel à d'autres techniques, par exemple, de projection de graines à l'aide d'un canon.

Ces machines de projection sont toutefois très coûteuses et, par conséquent, ces talus sont souvent laissés en friche.

Indépendamment de l'impossibilité de travailler sur terrain en forte déclivité, cette machine pose un autre problème lié à la nature des bandes de gazon.

En effet, ces bandes de gazon ont une épaisseur relativement épaisse et les rouleaux sont imposants mais surtout, il est quasiment impossible, lors du prélèvement, d'obtenir des bandes d'épaisseur identique et, de ce fait, pour une même longueur de bande, les rouleaux ont un diamètre différent.

Si cela n'a aucune conséquence grave lorsqu'on déroule un rouleau à la fois, cela est gênant lorsqu'on souhaite dérouler en même temps au moins deux rouleaux qui, nécessairement, doivent être juxtaposés, par exemple, de part et d'autre de l'axe de la machine.

En effet, en raison de cette différence de diamètre, pour un déroulement correct, les rouleaux devraient pouvoir tourner à des vitesses différentes et le petit rouleau plus rapidement que le gros rouleau.

Or, cela est d'autant impossible à faire avec la machine précitée que le contre rouleau n'appuierait que sur le gros rouleau qui seul serait entraîné et dont la bande serait en avance sur l'autre.

Un des résultats que l'invention vise à obtenir est un dispositif du type précité qui remédie aux inconvénients précités.

A cet effet, l'invention a pour objet un tel dispositif pour dérouler un rouleau de gazon comprenant :
- un châssis porté au moins indirectement par des organes de roulement,
- associé à ce châssis, un axe supportant au moins un rouleau de gazon et,
- des moyens pour déplacer l'axe précité selon une trajectoire prédéterminée,
ce dispositif étant notamment caractérisé en ce que :
- au lieu que, pour la dépose, l'axe portant au moins un rouleau soit porté à une distance constante du châssis et ne se déplace selon la trajectoire souhaitée qu'avec le châssis,
- la machine comprend :
   . d'une part, des moyens de déplacement de cet axe par rapport au châssis pour amener au moins un rouleau sur le sol et,
   . d'autre part, tant des liens par lesquels cet axe est relié au châssis que des moyens d'enroulement de ces liens permettant :
      .. d'une part de déplacer l'axe selon une trajectoire prédéterminée parallèle au moins au plan du sol et,
      .. d'autre part, de modifier la longueur d'un des liens par rapport à l'autre lien afin de contrôler l'orientation de cet axe.

L'invention sera bien comprise à l'aide de la description ci-après faite à titre d'exemple non limitatif en regard du dessin ci-annexé qui représente schématiquement :

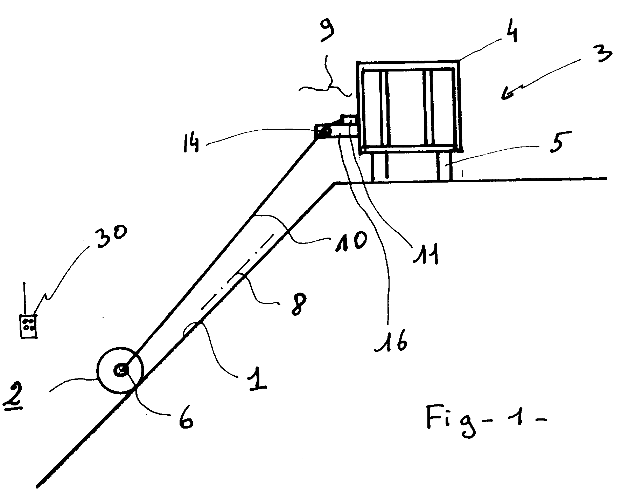

- figure 1 : une vue de face d'un dispositif de pose en cours d'utilisation pour engazonner un talus,

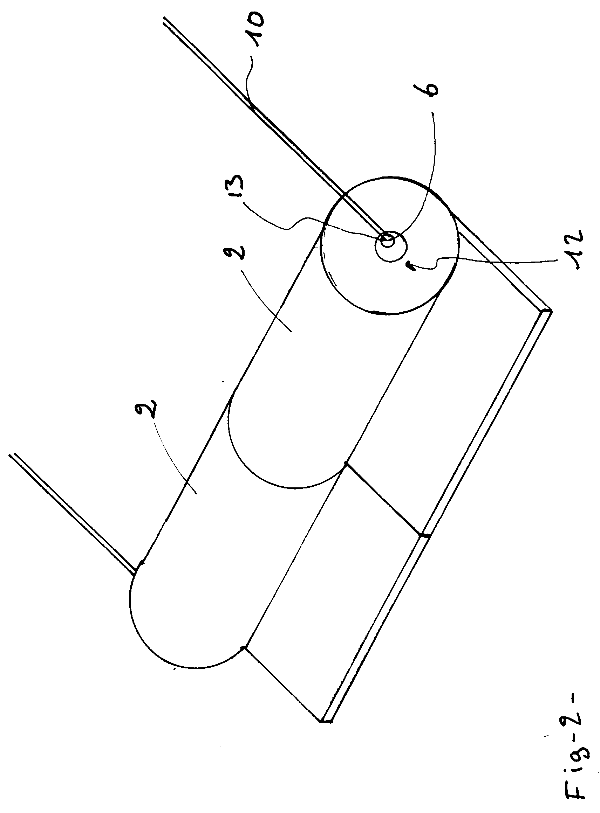

- figure 2 : une vue en perspective d'un détail du dispositif de la figure 1,

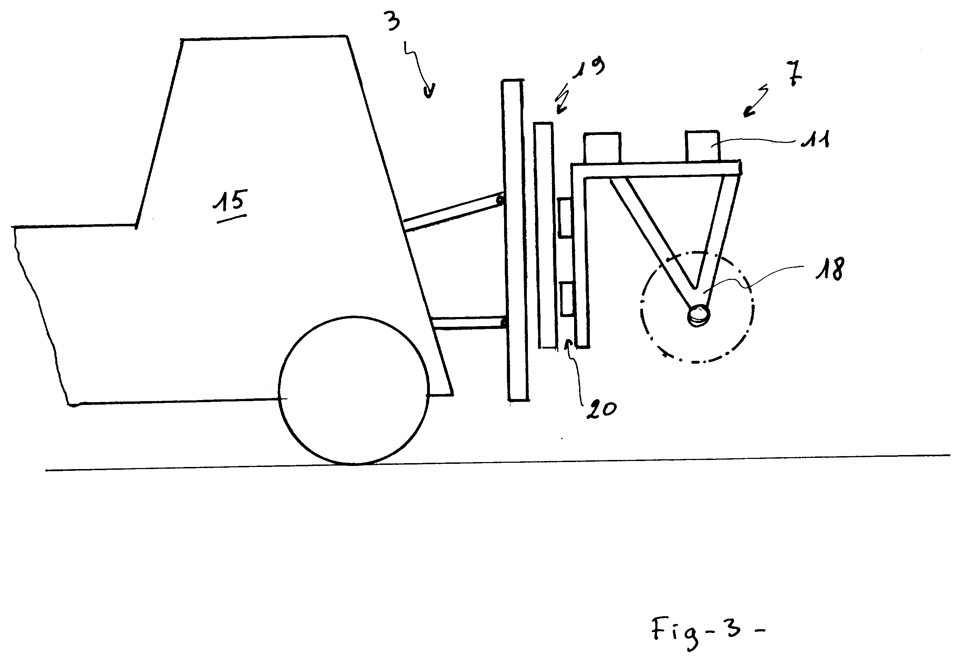

- figure 3 : vu de profil, le dispositif de pose.

En se reportant au dessin, on voit que, pour engazonner une surface 1 prédéterminée, on fait appel à une pluralité de bandes de gazon qui, prélevées en un autre lieu, sont déposées sur la dite surface 1 en les plaçant bout à bout et côte à côte.

Avant dépose, les bandes de gazon se présentent chacune sous la forme d'un rouleau 2.

Pour la pose de ce gazon, on fait appel à une machine 3 qui déroule au sol au moins un tel rouleau de gazon.

Classiquement, cette machine comprend :
- un châssis 4 porté au moins indirectement par des organes 5 de roulement, tel un support relié par un attelage trois points à un tracteur 15,
- associé à ce châssis par les moyens ci-après décrits, un axe 6 supportant au moins un rouleau de gazon et,
- des moyens 7 pour commander le déplacement d'au moins l'axe portant le rouleau selon une trajectoire prédéterminée.

Selon une caractéristique essentielle de l'invention :
- au lieu que, pour la dépose, l'axe 6 portant au moins un rouleau 2 soit porté à une distance constante du châssis et ne se déplace selon la trajectoire 8 souhaitée qu'avec le châssis,
- la machine comprend :
   . d'une part, des moyens 9 de déplacement de cet axe par rapport au châssis pour amener au moins un rouleau sur le sol et,
   . d'autre part, tant des liens 10 par lesquels cet axe 6 est relié au châssis que des moyens 11 d'enroulement de ces liens permettant :
      .. d'une part de déplacer l'axe selon une trajectoire prédéterminée parallèle au moins au plan du sol et,
      .. d'autre part, de modifier la longueur d'un des liens par rapport à l'autre lien afin de contrôler l'orientation de cet axe 6.

A cet effet, chacune des extrémités 12 de l'axe relié au châssis présente un moyen 13 d'ancrage pour celui des liens 10 qui lui est associé et chaque moyen d'enroulement des liens peut pendant au moins un moment être rendu indépendant de l'autre moyen d'enroulement dans son fonctionnement.

Ces dispositions permettent, en placant le châssis au sommet d'un talus, de descendre le rouleau à un endroit précis puis de le dérouler soit en remontant le rouleau par enroulement des liens, soit en le faisant descendre par déroulement des liens.

Le fonctionnement des moyens 11 d'enroulement étant indépendant, cela permet outre le contrôle de la direction de déplacement du rouleau de contrôler le devers.

Avantageusement, on utilise des treuils à moteur hydraulique.

On peut ainsi rapidement, sans difficulté et sans risque, déposer et dérouler des rouleaux de gazon même de diamètre différent et sur des terrains de forte pente.

Avantageusement, est prévue une commande à distance 30 des moyens d'enroulement.

Bien entendu, le châssis comprend des moyens 14 de guidage en translation des liens sur le châssis, tels des poulies.

Ce châssis est, par exemple, porté à l'arrière ou à l'avant d'un tracteur 15 et comprend une structure en forme de fourche 16 sur laquelle sont fixés tant les moyens d'enroulement que les poulies de guidage.

Cette structure est montée transversalement au sens de déplacement conventionnel du tracteur.

Outre les moyens précités de dépose de gazon, pendant l'arrêt du tracteur, notamment pour déposer des bandes de gazon sur des terrains en forte pente, le châssis peut comporter des moyens de dépose du gazon pendant le déplacement du tracteur pour notamment l'utiliser sur des terrains plats.

A cet effet, sont prévus des moyens 18 de réception de l'axe dans une position transversale au sens de déplacement du véhicule moteur et le châssis comprend des moyens 19 de contrôle de la hauteur de cet axe par rapport à la surface réceptrice de la bande de gazon en vue de pouvoir amener et maintenir le rouleau en appui sur cette surface de réception pendant le déplacement du véhicule pour provoquer son déroulement par friction sur le sol et aidée en cela par la résistance liée à la partie de la bande de gazon déjà déposée.

Avantageusement, le châssis est associé à cet engin moteur par des moyens 20 autorisant le déplacement du châssis dans une direction horizontale et transversale à la trajectoire de l'engin moteur.

Il s'agit, par exemple, d'un système à glissière avec crémaillère ou vérins.

Le châssis pouvant se déplacer dans un plan transversal au déplacement de l'engin moteur, il est possible de corriger les éventuelles erreurs de trajectoire et surtout corriger le glissement qui peut se produire lorsqu'on se déplace sur un terrain en devers.

Avantageusement, pour dérouler plusieurs rouleaux à la fois, l'axe receveur des rouleaux est scindé en plusieurs tronçons dont la longueur de chacun d'eux est sensiblement égale à la dimension axiale du rouleau et chacun de ces tronçons est pourvu de ses propres moyens de guidage en rotation pour chaque rouleau.

Cela permet de minimiser les frottements entre les rouleaux disposés côte à côte et donc de dérouler plus facilement plusieurs rouleaux en même temps.

Pour dérouler les rouleaux, on prendra soin qu'ils soient montés flottants sur l'axe.

## Revendications

1. Dispositif pour dérouler au sol au moins un rouleau de gazon à l'aide d'une machine comprenant :
- un châssis (4) porté au moins indirectement par des organes (5) de roulement, tel un support relié par un attelage trois points à un tracteur (15),
- associé à ce châssis, un axe (6) supportant au moins un rouleau de gazon et,
- des moyens (7) pour commander le déplacement d'au moins l'axe portant le rouleau selon une trajectoire prédéterminée,
ce dispositif étant **CARACTERISE** en ce que :
- au lieu que, pour la dépose, l'axe (6) portant au moins un rouleau (2) soit porté à une distance constante du châssis et ne se déplace selon la trajectoire 8 souhaitée qu'avec le châssis,
- la machine comprend :
. d'une part, des moyens (9) de déplacement de cet axe par rapport au châssis pour amener au moins un rouleau sur le sol et,
. d'autre part, tant des liens (10) par lesquels cet axe (6) est relié au châssis que des moyens (11) d'enroulement de ces liens permettant :
.. d'une part de déplacer l'axe selon une trajectoire prédéterminée parallèle au moins au plan du sol et,
.. d'autre part, de modifier la longueur d'un des liens par rapport à l'autre lien afin de contrôler l'orientation de cet axe (6).

2. Dispositif selon la revendication 1 **caractérisé** en ce que chacune des extrémités (12) de l'axe relié au châssis présente un moyen (13) d'ancrage pour celui des liens (10) qui lui est associé et chaque moyen d'enroulement des liens peut pendant au moins un moment être rendu indépendant de l'autre moyen d'enroulement dans son fonctionnement.

3. Dispositif selon la revendication 1 **caractérisé** en ce qu'est prévue une commande à distance (30) des moyens d'enroulement.

4. Dispositif selon la revendication 1 ou 2 **caractérisé** en ce que le châssis comprend des moyens (14) de guidage en translation des liens sur le châssis.

5. Dispositif selon la revendication 1 **caractérisé** en ce que le châssis comprend une structure en forme de fourche (16) sur laquelle sont fixés tant les moyens d'enroulement que des poulies de guidage.

6. Dispositif selon la revendication 5 **caractérisé** en ce que cette structure est montée transversalement au sens de déplacement conventionnel du tracteur.

7. Dispositif selon la revendication 1 **caractérisé** en ce que le châssis comporte des moyens de dépose du gazon pendant le déplacement du tracteur pour notamment l'utiliser sur des terrains plats.

8. Dispositif selon la revendication 7 **caractérisé** en ce que sont prévus des moyens (18) de réception de l'axe dans une position traversale au sens de déplacement du véhicule moteur et le châssis comprend des moyens (19) de contrôle de la hauteur de cet axe par rapport à la surface réceptrice de la bande de gazon en vue de pouvoir amener et maintenir le rouleau en appui sur cette surface de réception pendant le déplacement du véhicule pour provoquer son déroulement par friction sur le sol.

9. Dispositif selon la revendication 7 ou 8 **caractérisé** en ce que le châssis est associé à cet engin moteur par des moyens (20) autorisant le déplacement du châssis dans une direction horizontale et transversale à la trajectoire de l'engin moteur.

10. Dispositif selon l'une quelconque des revendications 1 à 9 **caractérisé** en ce que l'axe receveur des rouleaux est scindé en plusieurs tronçons dont la longueur de chacun d'eux est sensiblement égale à la dimension axiale du rouleau et chacun de ces tronçons est pourvu de ses propres moyens de guidage en rotation pour chaque rouleau.
